# EUROPEAN PATENT SPECIFICATION

(11) **EP 4 324 125 B1**
(45) Date of publication and mention of the grant of the patent: **22.04.2026**
(21) Application number: 21719577.5
(22) Date of filing: 14.04.2021
(51) Int. Cl.: H04L 41/16, H04L 41/14, H04L 41/08

(54) **APPARATUS, METHOD AND COMPUTER PROGRAM FOR MANAGING A REQUEST FOR COGNITIVE NETWORK FUNCTIONS AND/OR MACHINE LEARNING MODELS**
VORRICHTUNG, VERFAHREN UND COMPUTERPROGRAMM ZUR VERWALTUNG EINER ANFORDERUNG FÜR KOGNITIVE NETZWERKFUNKTIONEN UND/ODER MASCHINENLERNMODELLE
APPAREIL, PROCÉDÉ ET PROGRAMME INFORMATIQUE PERMETTANT DE GÉRER UNE REQUÊTE CONCERNANT DES FONCTIONS DE RÉSEAU COGNITIF ET/OU DES MODÈLES D'APPRENTISSAGE MACHINE

(43) Date of publication of application: 21.02.2024
(73) Proprietor: Nokia Technologies Oy, 02610 Espoo (FI)
(72) Inventor: MWANJE, Stephen, 84405 Dorfen (DE); GOERGE, Jürgen, 82061 Neuried (DE)
(74) Representative: Mudge, Kevin
(86) International application number: PCT/EP2021/059631
(87) International publication number: WO 2022/218519

(56) References cited:
- WO-A1-2020/253953
- LIU TENGFEI CHINA UNICOM P R CHINA: "Architecture for ML marketplace integration in future networks including IMT-2020;ML5G-I-146-R9", vol. ML5G, 12 June 2019 (2019-06-12), pages 1 - 30, XP044267640, Retrieved from the Internet <URL:https://extranet.itu.int/sites/itu-t/focusgroups/ML5G/input/ML5G-I-146-R9.docx> [retrieved on 20190612]
- QI SUN CHINA MOBILE P R CHINA: "Draft new Recommendation ITU-T Y.ML-IMT2020-Data-Handling: "Framework of data handling to enable machine learning in future networks including IMT-2020" (output of Q20/13 e-meetings in August 2019);TD409/WP1", vol. 20/13, 24 September 2019 (2019-09-24), pages 1 - 52, XP044274255, Retrieved from the Internet <URL:https://www.itu.int/ifa/t/2017/sg13/docs/191014/td/ties/wp1/T17-SG13-191014-TD-WP1-0409!!MSW-E.docx> [retrieved on 20190924]

## Description

### Field of the disclosure

The present disclosure relates to an apparatus for managing a request for a cognitive network function and/or a machine learning model fulfilling a requirement or for information relating to a cognitive network function and/or a machine learning model fulfilling a requirement.

### Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standard are the so-called 5G standards.

LIU TENGFEI CHINA UNICOM P R CHINA: "Architecture for ML marketplace integration in future networks including IMT-2020; ML5G-I-146-R9" discusses the architecture for integration of machine learning marketplaces to telecommunication networks.

### Summary

The invention relates to apparatuses as set forth in the claims. It will be understood that aspects of this disclosure falling outside the scope of the claims may not be part of the claims but may be useful to understand the invention.

According to an aspect there is provided an apparatus according to independent claim 1.

Advantageous features are provided in the dependent claims as appended.

### List of abbreviations

- AF:: Application Function
- AI:: Artificial Intelligence
- AMF:: Access and Mobility Management Function
- API:: Application Protocol Interface
- BS:: Base Station
- CM:: Conditional Mandatory
- CNF:: Cognitive Network Function
- CoMDI:: Cognitive network function and model Deployment Interface
- CoMReF:: Cognitive network function and Model Repository Function
- CoMSeF:: Cognitive network function and Model Selection Function
- CoMSI:: Cognitive network function and model Specification Interface
- CU:: Centralized Unit
- DL:: Downlink
- DU:: Distributed Unit
- F:: False
- gNB:: gNodeB
- GSM:: Global System for Mobile communication
- HSS:: Home Subscriber Server
- IOC:: Information Object Class
- loT:: Internet of Things
- LTE:: Long Term Evolution
- M:: Mandatory
- MAC:: Medium Access Control
- MDAS :: Management Data Analytics Service
- ML :: Machine Learning
- MS:: Mobile Station
- MTC:: Machine Type Communication
- NEF:: Network Exposure Function
- NF:: Network Function
- NR:: New radio
- NRF:: Network function Repository Function
- O:: Optional
- PDU:: Packet Data Unit
- RAM:: Random Access Memory
- (R)AN:: (Radio) Access Network
- ROM:: Read Only Memory
- SINR:: Signal to Interference Plus Noise Ratio
- SMF:: Session Management Function
- NSSAI:: Network Slice Selection Assistance Information
- T:: True
- TR:: Technical Report
- TS:: Technical Specification
- UE:: User Equipment
- UMTS:: Universal Mobile Telecommunication System
- 3GPP:: 3^{rd} Generation Partnership Project
- 5G:: 5^{th} Generation
- 5GC:: 5G Core network
- 5GS:: 5G System

### Brief Description of the Figures

Aspects will now be described, by way of example only, with reference to the accompanying Figures in which:
Figure 1 shows a schematic representation of a 5G system;
Figure 2 shows a schematic representation of a control apparatus;
Figure 3 shows a schematic representation of a terminal;
Figure 4 shows a schematic representation of a 5GC sub-system comprising a cognitive network function and model repository function and cognitive network function and model selection function with interfaces for requesting a cognitive network function and/or a machine learning model, where the cognitive network function and model repository function integrates the cognitive network function and model selection function;
Figures 5a and 5b shows a signaling diagram of a process for managing a request for a cognitive network function and/or a machine learning model fulfilling a requirement;
Figures 6a and 6b shows a block diagram illustrating the relationships among a cognitive network function, machine learning models and other network functions;
Figure 7 shows a schematic representation of a 5GC sub-system comprising a cognitive network function and model repository function and cognitive network function and model selection function with interfaces for requesting a cognitive network function and/or a machine learning model, where the cognitive network function and model repository function is separate from the cognitive network function and model selection function;
Figure 8 shows a block diagram of a process for managing a request for a cognitive network function and/or a machine learning model fulfilling a requirement or for information relating to a cognitive network function and/or a machine learning model fulfilling a requirement;
Figure 9 shows a block diagram of a method for managing a request for a cognitive network function and/or a machine learning model fulfilling a requirement or for information relating to a cognitive network function and/or a machine learning model fulfilling a requirement, performed for example by a cognitive network function and model selection function;
Figure 10 shows a block diagram of a method for managing a request for a cognitive network function and/or a machine learning model fulfilling a requirement or for information relating to a cognitive network function and/or a machine learning model fulfilling a requirement, performed for example by a cognitive network function and model repository function; and
Figure 11 shows a schematic representation of a non-volatile memory medium storing instructions which when executed by a processor allow a processor to perform one or more of the steps of the methods of Figures 9 and 10.

### Detailed Description of the Figures

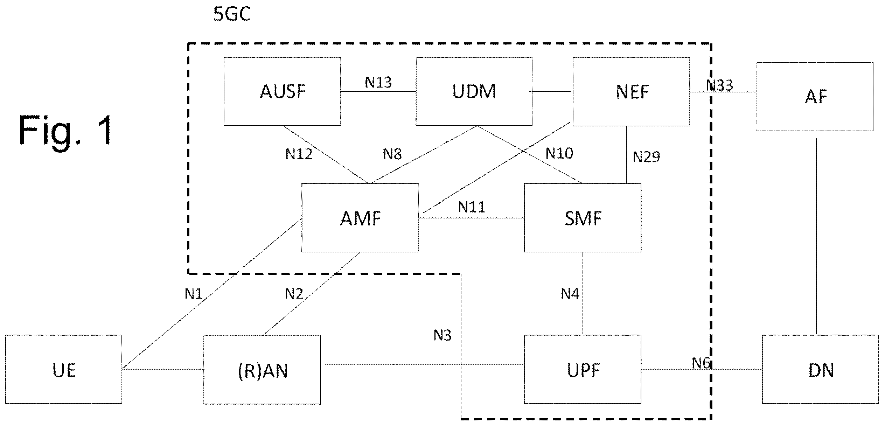

In the following certain aspects are explained with reference to mobile communication devices capable of communication via a wireless cellular system and mobile communication systems serving such mobile communication devices. Before explaining in detail the exemplifying aspects, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may comprises a terminal, a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an access and mobility management function (AMF), a session management function (SMF), an authentication server function (AUSF), a user data management (UDM), a user plane function (UPF) and/or a network exposure function (NEF). Although not illustrated the 5GC may comprise other network functions (NF), such as a network management function (NMF), a cognitive network function (CNF) cognitive network function and model repository function (CoMReF) and a cognitive network function and model selection function (CoMSeF).

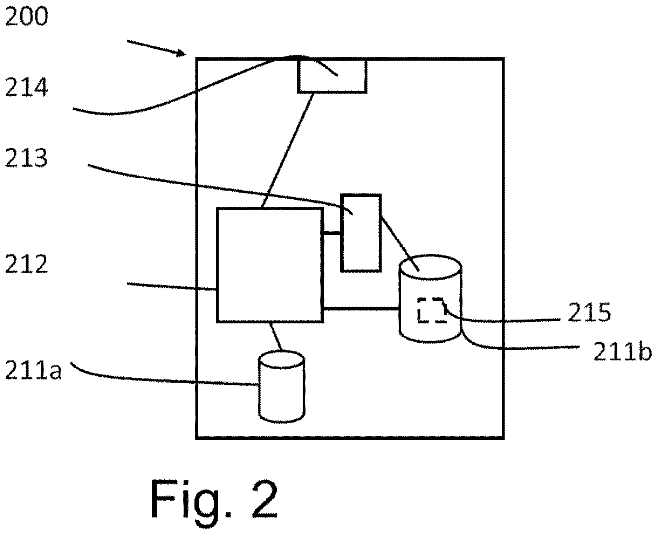

Figure 2 illustrates an example of a control apparatus 200 for controlling a function of the (R)AN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some aspects, each function of the (R)AN or the 5GC comprises a control apparatus 200. In alternative aspects, two or more functions of the (R)AN or the 5GC may share a control apparatus.

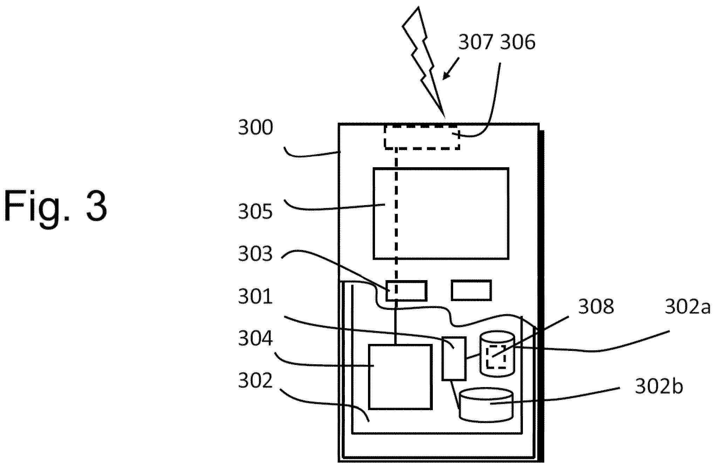

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CloT) device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspects of the present disclosure relate to NFs using artificial intelligence (AI) models and more specifically to machine learning (ML) models.

NFs using ML models are steadily gaining ground in communication networks. Such NFs may for example be used for automating network management or for fundamental network procedures like resource scheduling. Typically, a ML model is developed and trained by a vendor. The ML model may be trained with one or more ML model version contexts (i.e. network training contexts) during a training or development phase. Then, when it is confirmed that the ML model achieves a desired behavior, the vendor may parameterize and bind the ML model with operational meta information to implement a cognitive network function (CNF). On deployment into an operator's production network, the CNF may be tested and validated by the operator (e.g., using a sandbox environment). The CNF may be deployed into operation after successfully passing the validation.

Alternatively, multiple ML models may be developed and trained by a vendor. Each ML model may be trained with one or more ML model version contexts during a training or development phase. The vendor may parameterize and bind the multiple ML models with operational meta information to implement a CNF. For optimal performance, a ML model among the multiple ML models may be selected so that the ML model version context for which the ML model has been trained matches a network expected context or a network detected context.

One or more aspects of the present disclosure provide techniques for supporting the request, identification and/or selection of a ML model so that the ML model version context for which a ML model has been trained matches a network expected context or a network detected context.

In a typical network operation, it may be possible to have multiple CNFs and/or multiple ML models available for supporting a same NF/ addressing a same problem (e.g. optimization of handover thresholds). The multiple ML models may be trained with the same or different ML model version contexts (e.g. city centre vs. rural area).

In one example, multiple CNFs may have been purchased from different vendors for supporting a same NF/ addressing a same problem. Each CNF may be associated with a single ML model trained with a ML model version training context.

In another example, a single CNF may have been purchased from a vendor for supporting a NF/ addressing a problem. The single CNF may be associated with multiple ML models trained within different ML model version contexts.

There can be significant variations in the network expected context or network detected context. It may then become important to choose among multiple CNFs and/or multiple ML models so that the ML model version context for which a ML model has been trained matches a network expected context or a network detected context.

There may be a need to provide means for allowing an operator, a network automation platform or function on such a platform to request for a CNF and/or a ML model that fits a certain context or for information about a CNF and/or a ML model that fits a certain context.

There may be a need to provide means for parsing such a request and for matching the request to one of multiple CNF s and/or one of multiple ML models.

There may be a need to provide means for sending one of multiple CNFs and/or one of multiple ML models or information relating to one of multiple CNFs and/or one of multiple ML models to the operator, the network automation platform or function on such a platform.

Moreover, to support such selection among the multiple CNFs and/or multiple ML models, there may be a need to provide means for describing the multiple CNFs and/or multiple ML models in an information model. Such information model may then allow standard information objects to be exchanged on interfaces despite multiple vendors, NFs, network contexts and/or a combination thereof. The information objects may use fields of well-defined semantics.

One or more aspects of this disclosure provide a solution allowing a selection of a fitting context-specific CNF and/or ML model.

Multiple architectures have been proposed for use of AI/ ML in mobile networks (e.g. ITU-T FG-ML5G, FG-ML5G-ARC5G Unified architecture for machine learning in 5G and future networks and ETSI GS ZSM 002 V0.12.0 (2019-05) Reference Architecture). However, these architectures typically assume that there is only one ML model available to address all possible network contexts. They do not consider scenarios where multiple CNFs or ML models have been trained and where multiple CNFs or ML models need to be matched to a network expected context or a network detected context.

The management data analytics service (MDAS) concept in 3GPP SA5, proposes to standardize the interfaces that allow consumers to request and receive analytics for a number of analytics use cases (e.g. S5-204246 pCR Add overview of MDA functionality). Although MDAS assumes that several analytics functions may be available, it does not provide any means through which one among the many available analytics functions may be selected according to a network training context, a network expected context or a network detected context. Instead, it is assumed either that the requestor knows exactly the kind of analytics they need and makes a request for the specific analytics or that the analytics function is able to select the correct model, because the analytics function knows the context of the consumer. As such MDAS would also benefit from a solution that provides means for such context-based selection of CNFs (in that case supporting analytics functions) and/or ML models.

Outside the networking area, there exist some approaches to add metadata to AI/ML models. It has for example been provided the possibility to add and retrieve ML metadata (e.g. Google Cloud, Data Analytics Products). The metadata is focused on the ML model and its training, like when it was created or which ML model type and various training details. The proposed models cannot be used for selecting among multiple network-focussed ML models or CNFs and no interfaces are provided for how such ML models may be requested for a network expected context or a network detected context.

One or more aspects of this disclosure propose a CNF model repository function (CoMReF) and mechanisms through which entities (e.g. an operator, a network automated platform or a network automated function on a network automated platform) may select CNFs and/or ML models and/or information (i.e. metadata) relating to the CNFs and/or ML models.

One or more aspects of this disclosure propose a mechanism allowing for a structured way of defining CNFs and/or ML models.

One or more aspects of this disclosure propose a mechanism allowing for a structured way in which an external entity can describe desired CNFs, ML models and/or ML model version contexts so that a CoMReF can understand and avail such CNF s and/or ML models.

A CoMReF may be provided so that entities (e.g. an operator, a network automated platform or a network automated function on a network automated platform) may select CNFs and/or ML models and/or information (i.e. metadata) relating to the CNFs and/or ML models.

An information model may be provided. The information model may comprise information object class (IOC) for CNFs and/or ML models. The information model may support the interactions between entities (e.g. an operator, a network automated platform or a network automated function on a network automated platform) and the CoMReF. The information model may enable a standardized characterization of the CNFs and/or ML models.

Standard specifications may be provided for such IOCs. The standard specifications may define a standard format for specifying a network training context, a network expected context or a network detected context. Vendors may provide trained ML models for a CNF with a standardized "scope" specification.

A cognitive network function and model selection function (CoMSeF) may be provided. The CoMSeF may be an implementation of logic that enables the CoMReF to match the available CNFs and/or ML models to an incoming request and to identify a best fitting CNF and/or ML model.

A structured interface, the Cognitive Network Function and Model Specification Interface (CoMSI), may be provided. The CoMSI may allow entities (e.g. an operator, a network automated platform or a network automated function on a network automated platform) to specify (automation) requirements (e.g. expected context or detected context) that need to be fulfilled and to request for a CNF and/or ML model that can fulfill these requirements. Through the CoMSI the CoMReF may return the available CNFs and/or ML models that fulfil the requirements or respond to inform the entities (e.g. an operator, a network automated platform or a network automated function on a network automated platform) when such requests cannot be met.

A mechanism for selecting CNFs and/or ML models may be provided using the CoMSI, CoMReF, CoMSeF and/or the information model.

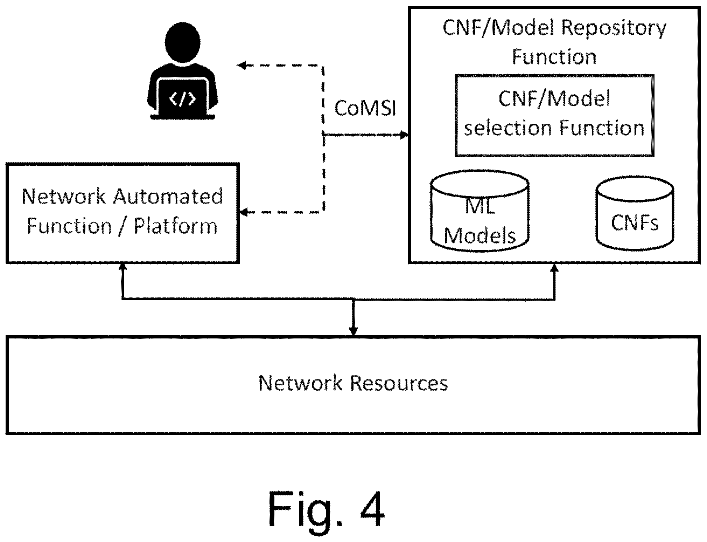

Figure 4 shows 5GC sub-system comprising a CoMReF and CoMSeF, where the CoMReF integrates the cognitive network function and model selection function CoMSeF.

The CoMReF may implement a database for storing the CNFs and ML models. The CoMReF may cooperate (optionally host) with the CoMSeF. The CoMSeF may be used to select the CNFs and/or ML models depending on requirements (e.g. network expected context or network detected context) stated on the CoMSI. A request for a CNF and/or a ML model may be initiated toward the CoMSeF by an operator, a network automated platform or a network automated function on a network automated platform. The request may state requirements (e.g. network expected context or network detected context) for a CNF and/or a ML model. The requirements may be stated in a well-defined format with well-defined fields. A priori an operator, a network automated platform or a network automated function on a network automated platform may not know which CNFs and ML models are available in the CoMReF. Also, an operator, a network automated platform or a network automated function on a network automated platform may not know the ML model version contexts with which the ML models have been trained. An operator, a network automated platform or a network automated function on a network automated platform may only know the requirements and thus may send a request that only states the requirements (e.g. network expected context or network detected context) to be matched to the ML model version contexts with which the ML models have been trained.

Following the request, the CoMSeF may evaluate the request by comparing the stated requirements (e.g. network expected context or network detected context) with the ML model version contexts with which the ML models have been trained. If a matching CNF and/or ML model is found, the CoMSeF may fetch the matched CNF and/or ML model from the CoMReF and may return the matched CNF and/or ML model to the operator, network automated platform or network automated function on a network automated platform for deployment on the network. In an implementation, the matched CNF and/or ML model may be deployed on the network by the CoMReF.

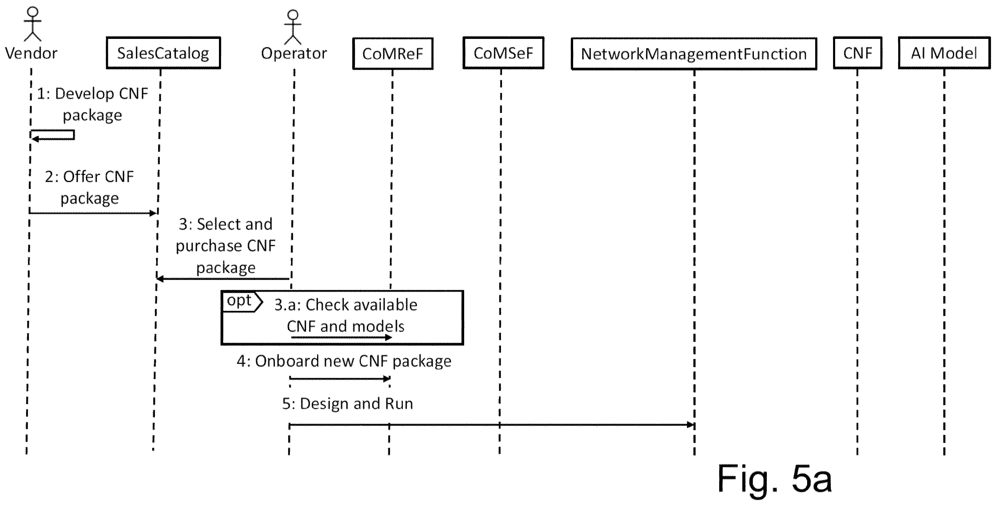

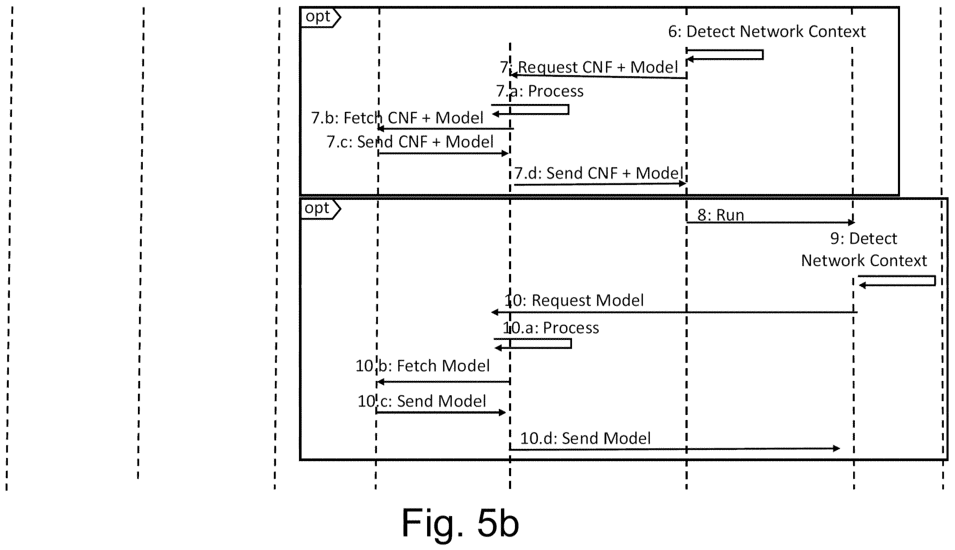

Figures 5a and 5b shows a signaling diagram of a process for managing a request for a CNF and/or a ML model fulfilling a requirement (e.g. network expected context or network detected context).

In step 1 a vendor may develop a CNF and trains multiple ML models with multiple ML model version contexts. The vendor may offer the CNF and/or ML models for sale via a sales catalogue (e.g. a special kind of CoMReF). The sales catalogue may expose CNF packages. A CNF package may comprise CNF. and/or ML models. For each CNF and/or ML model information (metadata) of the ML model version context may be provided in a well-defined machine-readable format. For each CNF and/or ML model information (metadata) of the network expected context and/or network detected context for which the vendor guarantees valid results may be provided. The information (metadata) may be provided in a well-defined machine-readable format.

In step 2, an operator may (manually) select the CNF and/or one of the multiple ML models that fits a network expected context based on the information (metadata) stored by the CoMReF.

In step 3 the operator may purchase the selected CNF and/or one of the multiple ML models.

In step 3a the operator may check a CoMReF for the portfolio of already available CNF s and/or ML models by retrieving and inspecting the information (metadata) stored by the CoMReF.

In step 4 the operator may onboard the selected CNF and/or one of the multiple ML models to the CoMReF. The operator may onboard information (metadata) relating to the selected CNF and/or one of the multiple ML models to the CoMReF.

In step 5 during design time of a network management function (e.g. a closed loop) the operator may query the information (metadata) of the CoMReF to select a CNF and/or a ML model that matches a network expected context.

The network management function may require a CNF fit for the respective use case handled by that NMF. But there may be multiple CNFs or even for one CNF multiple ML models that can support the NMF. The NMF may need to identify the appropriate CNF and ML model which it then may deploy for its use case.

In step 6 during run time of the network management function, the network management function may determine a network detected context. The network detected context may be associated with a specific scope (e.g. area and/or time) of the network.

In step 7 based on the detected context and/or a network expected context the network management function may send a request to a CoMSeF for a CNF and/or a ML model with a ML model version context that matches the network detected context and/or the network expected context.

In step 7a the CoMSeF may process the request. The CoMSeF may store metadata relating to the CNFs and/or ML models stored on the CoMReF. The metadata may comprise the ML model version contexts with which the ML models have been trained. The CoMSeF may compare the network detected context and/or the network expected context with the ML model version contexts with which the ML models have been trained. The ML model version context may comprise training conditions, a training state, operating or inference conditions, reference performance, CNF Properties / parameters, data characteristics or other (as discussed below). The ML model version context may also comprise expected conditions.

In step 7b the CoMSeF may send a request to the CoMReF for a CNF and/or a ML model with a ML model version context that matches the network detected context and/or the network expected context. The CoMReF may identify a CNF and/or a ML model with a ML model version context that matches the network detected context and/or the network expected context.

In step 7c the CoMReF may send a response to the request to the CoMSeF comprising the CNF and/or the ML model with a ML model version context that matches the network detected context and/or the network expected context.

In step 7d, the CoMSeF may send a response to the request to the network management function comprising the CNF and/or the ML model with a ML model version context that matches the network detected context and/or the network expected context.

It will be understood that although in the above the requirement to be matched to a ML model version context is the network detected context and/or the network expected context other characteristics may be stated in the requests and may be matched to the ML model version context (e.g. training state, CNF properties or parameters, data characteristics or other).

In step 8 the network management function may run the CNF, which further on acts autonomously.

In step 9 during run time the CNF may determine a network detected context. The network detected context may be associated with a specific scope (e.g. area or time) of the network.

In step 10 based on the network detected context and/or a network expected context the CNF may send a request to the CoMSeF for a CNF and/or a ML model with a ML model version context that matches the network detected context and/or the network expected context.

In step 10a the CoMSeF may process the request. The CoMSeF may store metada relating to the CNFs and/or ML models stored on the CoMReF. The metadata may comprise the ML model version contexts with which the ML models have been trained. The CoMSeF may compare the network detected context and/or the network expected context with the ML model version contexts with which the ML models have been trained. The ML model version context may comprise training conditions, a training state, operating or inference conditions, reference performance, CNF Properties / parameters, data characteristics or other (as discussed below). The ML model version context may also comprise expected conditions.

In step 10b the CoMSeF may send a request to the CoMReF for a ML model version with a ML model version context that matches the network detected context and/or the network expected context. The CoMReF may identify a ML model with a ML model version context that matches the network detected context and/or the network expected context.

In step 10c, the CoMReF may send a response to the request to the CoMSeF comprising the ML model with a ML model version context that matches the network detected context and/or the network expected context.

In step 10d, the CoMSeF may send a response to the request to the CNF comprising the ML model with a ML model version context that matches the network detected context and/or the network expected context.

Again, it will be understood that although in the above the requirement to be matched to a ML model version context is the network detected context and/or the network expected context other characteristics may be stated in the requests and may be matched to the ML model version context (e.g. training state, CNF properties or parameters, data characteristics or other).

The formal description of a CNF and/or ML model may include the ML model version context that applies to the CNF and/or ML model. Multiple ML models may be maintained for a CNF, each differing in the ML model version context. A ML model version context may be identified by ML model version context attributes.

Table 1 illustrate an example of a formal description of a CNF. The CNF may be identified by a CNF identifier (e.g. Nokia_CMO_ 2021a) and a CNF version identifier (e.g. NK01_Rural). The CNF version identifier may be associated with a specific scope (e.g. designed for a rural area). The CNF may be associated with one or more ML models. Each ML model may be identified by a ML model identifier (e.g. NK01_Rural) and a ML model version identifier (NK01_Rural_v2102). Each ML model version identifier may be associated with a specific scope (e.g. designed for a rural area). Each ML model version identifier may be associated with a specific sub-scope (e.g. autogenerated based training data from February 2021). Each ML model may be associated with one or more ML model version context. The ML model version context may be identified by ML model version context attributes.

**Table 1**

| **Field** | **Attribute** | **Value** | **Comment** |
|---|---|---|---|
| CNF identifier | | Nokia_CMO_ 2021a | Base identifier (vendor+usecase+ etc.) |
| CNF version identifier | | NK01_Rural | e.g. based on main context |
| ML model identifier | | NK01_Rural | |
| ML model version identifier | | NK01_Rural_v2102 | e.g. autogenerated based on training data |
| | Training conditions | Information object | |
| | Training state | Information object | |
| | Operating/ inference conditions | Information object | |
| ML model version context | Reference performance | Information object | |
| | CNF properties / parameters | Information object | |
| | Data characteristics | Information object | |

The ML model version context may comprise a training conditions attribute. The training conditions may comprise the conditions under which the ML model was trained. Such conditions may include statistic of UE velocity during training, statistic of channel conditions during training, statistics of signal to interference plus noise ratio (SINR) during training, cell traffic during training or other.

The ML model version context may comprise a training state attribute. The training state may indicate an amount of training data and/or duration of training runs. A training state may for example distinguish a partially trained version from a mature version.

The ML model version context may comprise operating or inference conditions. The operating or inference conditions may be the conditions under which the ML model may perform best. The ML model may have been trained on a wide data set but the capability or achievable performance may not be uniform across the data set. The ML model may not have been trained or may have been less trained on a sub-space of a data set. In such cases it may be useful to identify a sub-space of a data set in which the ML model performs best. The operating or inference conditions may for example state desired traffic characteristics.

The ML model version context may comprise a reference performance attribute. The reference performance may indicate an expected performance of the ML model. The reference performance may track an exact performance achieved by the ML model on a set of specified test cases. The test cases may indicate differences in usage scenarios.

The ML model version context may comprise a CNF properties or parameters attribute. The CNF properties or parameters may document the static properties of functions themselves or the algorithms used to create the functions. Example information may include neural network parameters like activation functions, number and size of layers, etc.

The ML model version context may comprise a data characteristics attribute. The data characteristics may comprise the characteristics of the assumed input data (e.g. whether the assumed input data is a matrix or a one-hot vector and for any such data structure the relations among the entries). The data characteristics may also comprise a length of training data as well as the pre-processing or quality requirements for that training data.

Based on information (metadata) relating to CNFs and/or ML models a tree may be created. The tree may comprise the CNFs and/or ML models. The tree may identify the critical differences between the ML models.

The CNF identifier may be autogenerated or may be generated by the operator. The CNF version identifier may be autogenerated or may be generated by the operator.

The ML model identifier may be autogenerated or may be generated by the operator. The ML model version identifier may be autogenerated or may be generated by the operator.

The ML model version context may be a characteristic of a ML model but may also be attributed to a CNF. Table 1 only illustrates the case where the ML model version context is attributed to the ML model version.

For each ML model version context attribute an information object may be provided. The information object may comprise a fixed set of dimensions. Example dimensions for three ML model version context attributes are shown in Table 2. For each dimension there may be a fixed set of alternatives among which a value may be selected.

**Table 2**

| **ML model version context attribute** | **Dimensions** | **Values** | | | |
|---|---|---|---|---|---|
| Training conditions and/or Operating conditions | | | | | |
| | Load | Low load | Medium load | High load | Congested |
| | User speed | Central Business District (<30 Kmph) | Urban (30-50 Kmph) | Country (50-80 Kmph) | Highway (>80 Kmph) |
| | Location | Central Business District | Urban | Suburban | Rural |

To allow for usage in multi-vendor environment, a CNF and/or a ML model may be described by a standardized information model. To this end, the CNF and/or ML models may be introduced as new IOCs to the 3GPP Network Resource Mode.

Such information model may serve various purposes. The information model may enable different network management tools to exchange management data to manage a CNF and/or a ML model during runtime, (i.e. to create, modify, and delete corresponding managed entities). Since a CNF is able to control other network functions, the information model may mirror these relationships. To characterize a CNF and/or a ML model during the training phase, the same standardized structure of the information model may be used. The information model may be used to document the network training context of the CNF and/or ML models during training phase and the preconditions required at runtime to ensure correct results of the CNF and/or ML models.

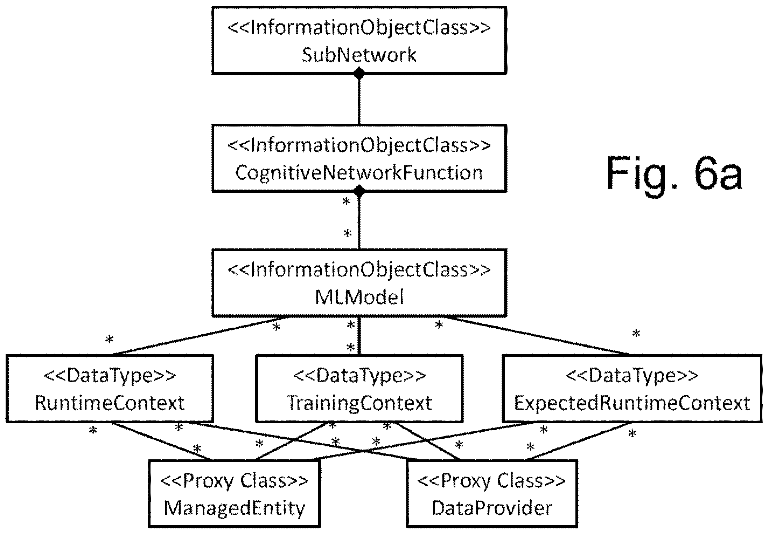

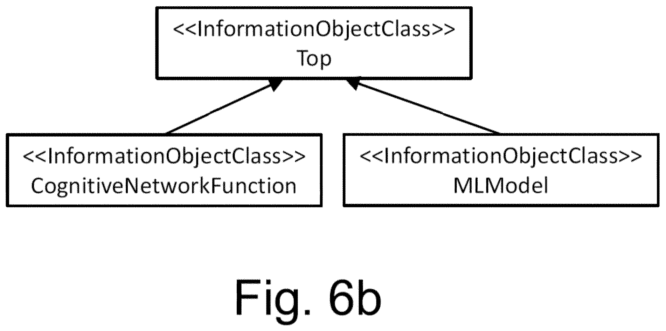

The applicable relationship between a CNF, ML models and other NFs is described by Figures 6a and 6b.

A CNF IOC may represent a CNF in the information model. A CNF may be associated with multiple ML models. A CNF may be identified by a CNF identifier and a CNF version identifier.

In an example the CNF IOC may have attributes as listed in Table 3: a CNFIdentifier attribute, a CNFVersion attribute and a CNFProperties attribute. These attributes may be a dataType or a class by its own. These attributes may comprise fields. The fields may comprise a support qualifier field, readable field, writable field, invariant sub-field and/or notifiable field.

**Table 3**

| **Attribute name** | **Support Qualifier** | **isReadable** | **iswritable** | **islnvariant** | **isNotifyable** |
|---|---|---|---|---|---|
| CNFIdentifier | M | T | F | F | F |
| CNFProperties | M | T | F | F | F |
| CNFVersionIdentifier | M | T | F | F | F |

Versions may not be part of the CNF but part of the ML model. In such case the selection may be a two-step approach, first to select the CNF and then select the ML model that matches an expected context or a detected context.

An ML model IOC may represent a ML model in the information model. The ML model may be trained with a ML model version context. The ML model may be associated with a CNF.

An ML model IOC may reflect the contexts at different phases. An ML model IOC may allow to manage a CNF and/or a ML model as part of a network (network detected context/runtime context). An ML model IOC may allow to manage the relationship of a CNF and/or a ML model as a management system with respect to other network functions (network detected context/runtime context). An ML model IOC may allow to document the context during training (network training context) of a CNF and/or a ML model and to document the context that is expected by the CNF for correct inference (network expected context/ expected runtime context).

Since each ML model may be related to a set of contexts (e.g. network training context, network expected context/expected runtime context and network detected context/runtime context), a ML Model IOC may contain lists of contexts.

A context may be associated to managed entities (e.g. network slice, network slice subnets or network functions) to model the configuration of the network and to characterize the data provided by the managed entities. Further, a context may refer to data providers that are not part of the 3GPP system and are thus not modelled as 3GPP managed entities.

A set of attributes for the ML Model IOC is stated by Table 4. The ML Model IOC may comprise a modelVersionContextList or trainingContextList attribute, an expectedRuntimeContextList attribute, a rutimeContextList attribute, a model properties attributes, a modelVersionldentifier attribute and an operatingConditions attribute. These attributes may be a dataType or a class by its own. These attributes may comprise fields. The fields may comprise a support qualifier field, readable field, writable field, invariant sub-field and/or notifiable field.

**Table 4**

| **Attribute name** | **Support Qualifier** | **isReadable** | **isWritable** | **isinvariant** | **isNotifyable** |
|---|---|---|---|---|---|
| ModelIdentifier | M | T | F | F | F |
| trainingContextList | M | T | F | F | F |
| expectedRuntimeContextList | M | T | F | F | F |
| rutimeContextList | M | T | T | F | T |
| modelProperties | M | T | T | F | T |
| modelVersionIdentifier | O | T | T | F | T |

Model properties may comprise a number of neural network layers, a size of neural network layers or other properties.

Three contexts may be documented: the detected context/runtimeContext, the trainingContext, and the expected context/ expected runtime context. Each of these contexts may be a data type of its own. These data types may document the context of a CNF and/or ML model during the different phases.

For each datatype the attributes in Table 5 may be applicable.

**Table 5**

| **Attribute name** | **Support Qualifier** | **isReadable** | **isWritable** | **isinvariant** | **isNotifyable** |
|---|---|---|---|---|---|
| ManagedEntityRef | M | T | F | F | F |
| DataProviderRef | M | T | F | F | F |
| startTime | CM | T | T | F | T |
| endtime | CM | T | T | F | T |
| trainingConditions | CM | T | F/T | F/T | F/T |
| trainingstate | CM | T | F/T | F/T | F/T |
| operatingConditions | CM | T | F/T | F/T | F/T |
| dataCharacteristics | CM | T | F/T | F/T | F/T |
| referencePerformance | CM | T | F/T | F/T | F/T |

DataProviderRef may refer to the data used for training of the model in a specific context or might refer to the data used for inference in a specific context. Troubleshooting of irregularities during the runtime of the CNF using a specific model in a specific context might rely on a comparison of the corresponding data sets.

Parameter values in TrainingContext and ExpectedRuntimeContext may be for documentation purpose and thus read-only.

StartTime and endTime may document the time interval of a TrainingContext or ExpectedRuntimeContext to characterize the amount of data that has been used for training or the amount of data that is expected during runtime, respectively.

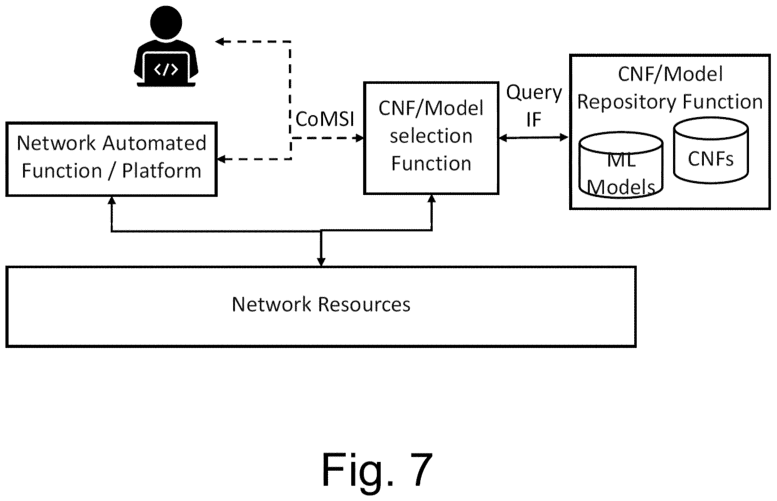

The CoMSeF may be implemented as a submodule within the CoMReF or as a standalone function that interacts with the CoMReF. Figure 4 illustrated the case where the CoMSeF may be implemented as a submodule within the within CoMReF while Figure 7 illustrated the case where the CoMSeF is a standalone function.

As a standalone function, the CoMSeF may implement both the CoMSI as well as the optional Cognitive Network Function and Model deployment Interface (CoMDI). The CoMDI would otherwise be implemented by the CoMReF when the CoMSeF is integrated within the CoMReF. Moreover, the CoMSeF may implement the query interface to the CoMReF.

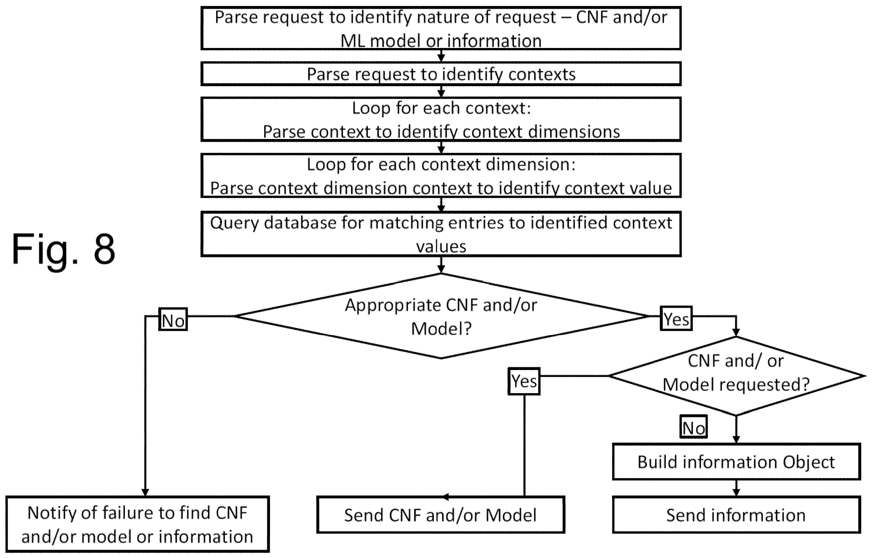

The logic for the operation of the CoMSeF may be broken down as illustrated by Figure 8.

The CoMSeF may parse the request to identify the nature of the request, either a request for a CMF and/or a ML model or a request for information relating to a CNF and/or a model for a context (e.g. expected context or detected context).

The CoMSeF may parse the request to identify the context attributes, the dimensions for each attribute and the values for each dimension.

The CoMSeF may query the CoMReF to identify a CNF and/or a ML model with a training context that match the identified context.

If CNF and/or a ML model is found, the CoMSeF notifies the requester as such.

If CNF and/or a ML model is found and a CNF and/or a ML model was requested, the CoMSeF may send the CNF and/or a ML model to the requester.

If CNF and/or a ML model is found and information relating to a CNF and/or a ML model was requested, the CoMSeF may build an information object comprising information relating to a CNF and/or a ML model and may send the information object to requester.

The CoMSI may allow an operator, a network automation platform or a function on such a platform to request for a CNF and/or a ML model by stating a required context (e.g. expected context or detected context). The request may be stated as a "getCNF", "getModel" or an equivalent "read" operation as illustrated below.

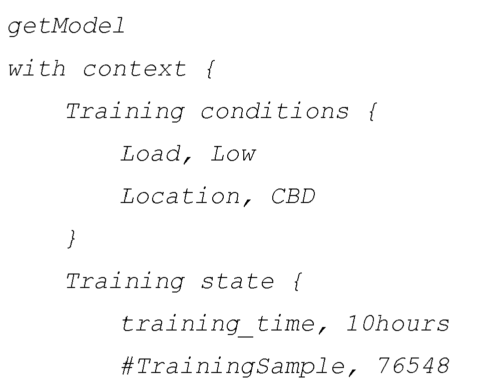

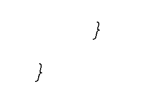

The CoMSI may allow an operator, a network automation platform or a function on such a platform to request for information on some or all CNF and/or ML models by stating required context (e.g. expected context or detected context). The request may be stated as a "getAlICNFs", "getAllModels" or an equivalent "read" operation as illustrated below.

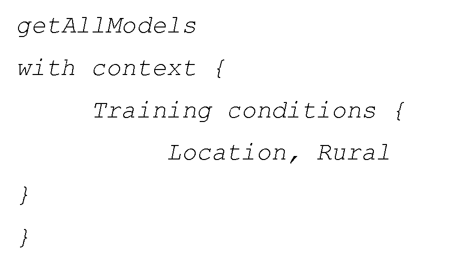

The CoMSI may allow the CoMSeF to be it as a standalone module or to be a module integrated into the CoMReF.

The CoMSI may allow the CoMSeF to notify an operator, a network automation platform or a function thereof when no CNF and/or ML model is found.

The CoMSI may allow the CoMSeF to send a CNF and/or ML model to an operator, a network automation platform or a function thereof. The CoMSeF may send an identifier of a CNF and/or ML model and/or a file containing the learned parameters of a CNF and/or ML model.

The CoMSI may allow the CoMSeF to send to the operator, to a network automation platform or to a function thereof or information relating to a CNF and/or ML model. The CoMSeF may send an identifier of a CNF and/or a ML model and/or a training context.

In an example an operator may have a radio system supplied by two vendors A and B each of which supplies equipment for an urban network and a rural network.

Consider that both vendors A and B supply CNFs and/or ML models for coverage and capacity optimization (CCO), trained at different time with different data (rural or urban), the CoMReF for this scenario may contain the information model represented by Table 6.

**Table 6**

| **CNF** | **Field** | **Attribute** | **Value** | **Comment** |
|---|---|---|---|---|
| | CNF identifier | | Vendor_A_CCO_2020_12 | Vendor A CCO model supplied in Dec 2020 |
| | CNF version identifier | | Vendor_A_CCO_2020_12_Rural | Trained CCO CNF planned for use in Rural areas |
| | Model | Model identifier | Vendor_A_CCO_2021_02_Rural | Rural Model |
| | | Model version identifier | Vendor_A_CCO_2021_02_Rural_v2101 | Rural Model trained on Jan 2021 data |
| | | Training conditions | Information object | |
| | | Training state | Information object | e.g. not converged |
| | | Operating/ inference conditions | Information object | |
| CCO | | ... | | |
| | Model | Model identifier | Vendor_A_CCO_2021_02_Rural | Rural Model |
| | | Model version identifier | Vendor_A_CCO_2021_02_Rural_v2102 | Rural Model trained on Feb 2021 data |
| | | Training conditions | Information object | |
| | | Training state | Information object | e.g. converged |
| | | Operating/ inference conditions | Information object | |
| | | ... | | |
| | | | | |
| CCO | CNF identifier | | Vendor_A_CCO_2020_12 | Vendor A CCO model supplied in Dec 2020 |
| | CNF version identifier | | Vendor_A_CCO_2021_02_Urban | Trained CCO CNF planned for use in Urban areas |
| | Model | Model identifier | Vendor_A_CCO_2021_02_Urban | Urban Model |
| | | Model version identifier | Vendor_A_CCO_2021_02_Urban_v2101 | Urban Model trained on Feb 2021 data |
| | | Training conditions | Information object | |
| | | Training state | Information object | e.g. not converged |
| | | Operating/ inference conditions | Information object | |
| | | ... | | |
| | | | | |
| CCO | CNF identifier | | Vendor_B_CCO_2020_11 | Vendor A CCO model supplied in Nov 2020 |
| | CNF version identifier | | Vendor_B_CCO_2021_11_Urban | Trained CCO CNF planned for use in Urban areas |
| | Model | Model identifier | Vendor_B_CCO_2021_11_Urban | Urban Model |
| | | Model identifier | Vendor_B_CCO_2021_11_Urban_v2101 | Urban Model trained on Dec 2020 data |
| | | Training conditions | Information object | |
| | | Training state | Information object | e.g. converged |
| | | Operating/ inference conditions | Information object | |
| | | ... | | |

An operator, a network automation platform or a function thereof wishing to find an appropriate CNF and/or ML model for a rural area may send the request below.

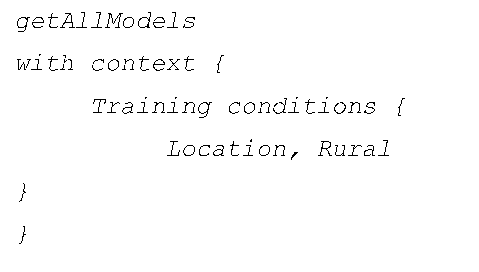

The CoMSeF may process the request and identifies that there are two models for rural locations and may send the response below to the operator, the network automation platform or the function thereof.

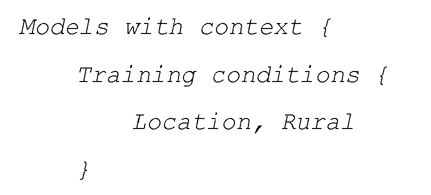

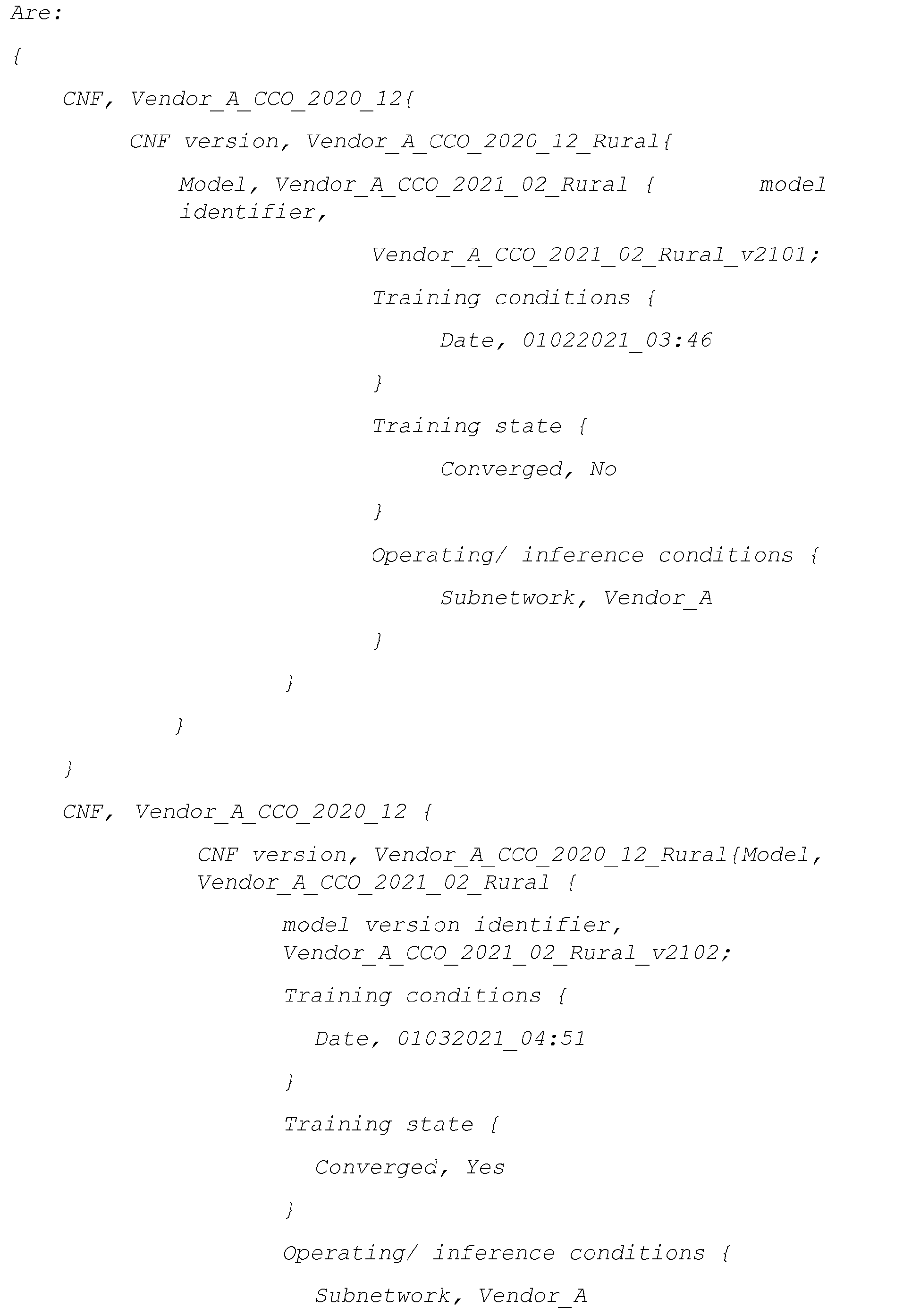

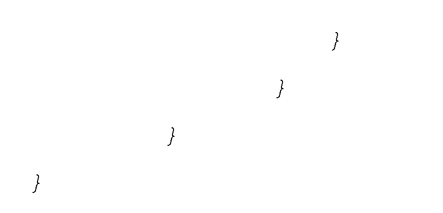

**Accordingly,** the operator, the network automation platform or the function thereof may realize that only ML models fitting to the network area for vendor A are available and that only one of the two is matured/converged. The operator, the network automation platform or the function thereof may then deploy a converged ML model. However, a month later when a new ML model is likely to have been trained the operator, the network automation platform or the function thereof may want to see if there is a ML model with better performance and may as such request for all ML models for Vendor A area that have converged. In that case the request is more specific, including more context fields as follows.

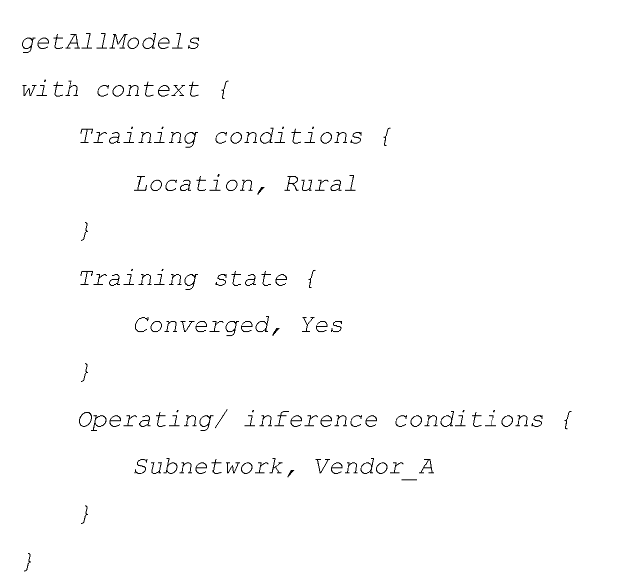

One or more aspects of this disclosure enable CNFs and/or ML models to be characterized with a description of the conditions assumed when training the ML model so that usage is matched to those conditions.

CNF and/or ML model information may allow a tree of different ML models to be created in a way that identifies the critical differences among them.

One or more aspects of this disclosure supports performance guarantees by providing means for selecting among different ML models that serve the same objective.

One or more aspects of this disclosure allow a CNF and/or a ML model to be matched with the right operating conditions, which avoids sub-optimal CNF and/or ML model performance.

Standardizing metadata allows the identification and selection of CNF and/or ML model to be undertaken by autonomic functions in the management plane.

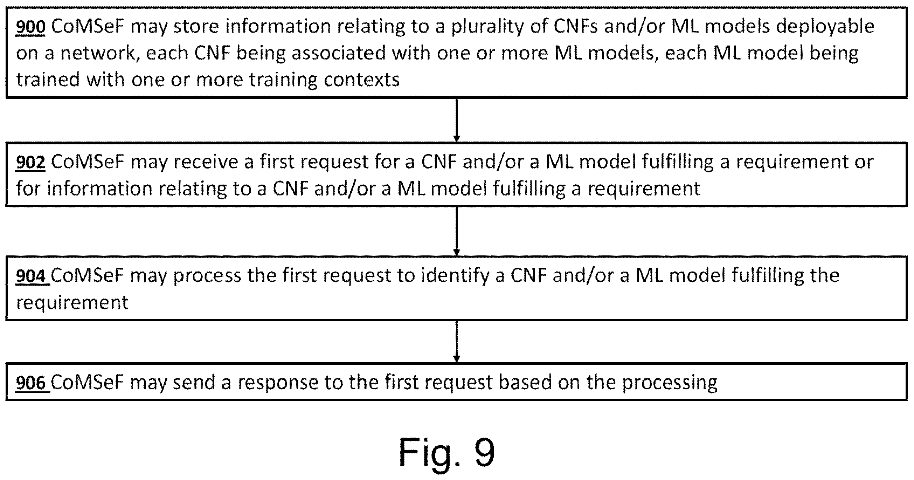

Figure 9 shows a block diagram of a method for managing a request for a CNF and/or a ML model fulfilling a requirement or for information relating to a CNF and/or a ML model fulfilling a requirement, performed for example by a CoMSeF.

In step 900, a CoMSeF may store information relating to a plurality of CNFs and/or ML models deployable on a network. Each CNF may be associated with one or more ML models. Each ML model may be trained with one or more training contexts.

In step 902, the CoMSeF may receive a first request for a CNF and/or a ML model fulfilling a requirement or for information relating to a CNF and/or a ML model fulfilling a requirement.

In step 904, the CoMSeF may process the first request to identify a CNF and/or a ML model fulfilling the requirement.

In step 906, the CoMSeF may send a response to the first request based on the processing.

Processing the first request to identify a CNF and/or a ML model fulfilling the requirement may comprise: comparing the information relating to the plurality of CNFs and/or ML models to the requirement to identify a CNF and/or a ML model fulfilling the requirement.

The CoMSeF may identify a CNF and/or a ML model fulfilling the requirement. The CoMSeF may send a second request for the identified CNF and/or ML model. The CoMSeF may receive a response to the second request comprising the identified CNF and/or ML mode. The CoMSeF may send a response to the first request comprising the identified CNF and/or ML model.

The CoMSeF may identify a CNF and/or a ML model fulfilling the requirement. The CoMSeF may send a response to the first request comprising information relating to the identified CNF and/or ML model.

The CoMSeF may identify no CNF and/or ML model fulfilling the requirement. The CoMSeF may send a response to the first request comprising an indication that no CNF and/or ML model has been identified.

The first request may comprise an expected context or a detected context. The requirement may comprise an availability of a CNF and/or a ML model with a training context matching the expected context or detected context.

Each training context, expected context or detected context may comprise one or more of the following context attributes: a managed entity reference attribute, a data provider reference attribute, a start time attribute, an end time attribute, a training conditions attribute, a training state attribute, an operating conditions attribute, a reference performance attribute, a cognitive network function properties attribute and/or a data characteristics attribute.

The first request may originate from a NMF or a CNF deployed on the network. The response to the first request may be directed to the NMF or the CNF deployed on the network.

The second request may be directed to a CoMReF deployed on the network. The response to the second request may originate from the CoMReF deployed on the network.

The CoMSeF may be integrated within the CoMReF or is separate from the CoMReF.

The CoMSeF may receive a first request for all CNFs and/or all ML models fulfilling a requirement or for information relation to all CNFs and/or all ML models fulfilling a requirement. The CoMSeF may process the first request to identify all CNFs and/or all ML models fulfilling the requirement.

Each CNF may be associated with a CNF IOC in an information model.

Each ML model may be associated with a ML model IOC in the information model.

Each training context, expected context or detected context may be associated with a training context, expected context or detected context IOC in the information model.

The CNF IOC may comprise a CNF properties attribute with a plurality of fields, each field having a single value selected among a fixed set of alternatives.

The ML machine learning model IOC may comprise a training context attribute, an expected context attribute and/or a detected context attribute with a plurality of fields, each field having a single value selected among a fixed set of alternatives.

The training context, expected context or detected context IOC may comprise one or more of the following training context, expected context or detected context attributes: a managed entity reference attribute, a data provider reference attribute, a start time attribute, an end time attribute, a training conditions attribute, a training state attribute, an operating conditions attribute, a reference performance attribute, a cognitive network function properties attribute and/or a data characteristics attribute with a plurality of fields, each field having a single value selected among a fixed set of alternatives.

Each CNF may be identified by a CNF identifier.

Each ML model may be associated with a ML model identifier.

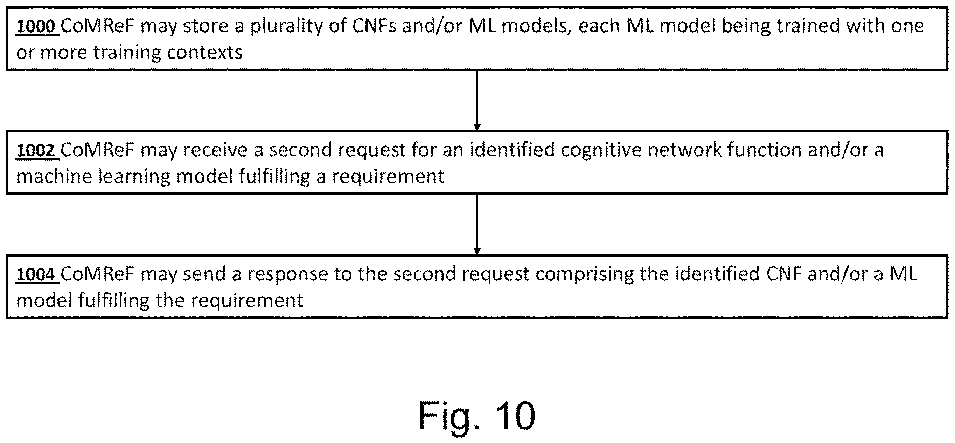

Figure 10 shows a block diagram of method for managing a request for a CNF and/or a ML model fulfilling a requirement or for information relating to a CNF and/or a ML model fulfilling a requirement, performed for example by a CoMReF.

The CoMReF may store a plurality of CNFs and/or ML models deployable on a network. Each CNF may be associated with one or more ML models. Each ML model may be trained with one or more training contexts.

The CoMReF may receive a second request for an identified CNF and/or a ML model fulfilling a requirement.

The CoMReF may send a response to the second request comprising the identified CNF and/or ML model fulfilling the requirement.

The second request may originate from a CoMSeF. The response to the second request may be directed to the CoMSeF.

The CoMReF may integrate the CoMSeF or may be separate from the CoMSeF.

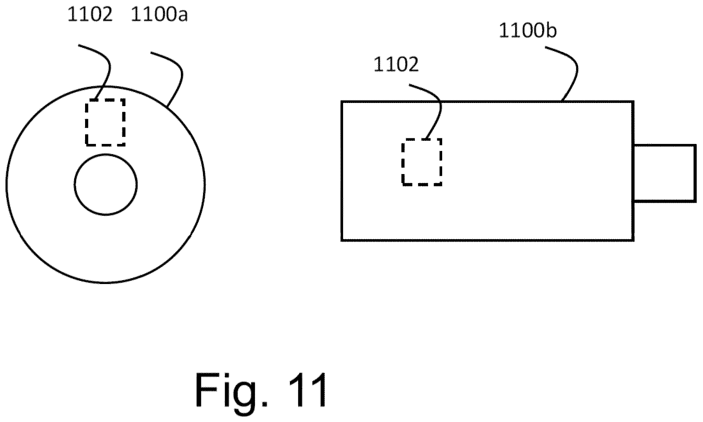

Figure 11 shows a schematic representation of non-volatile memory media 1100a (e.g. computer disc (CD) or digital versatile disc (DVD)) and 1100b (e.g. universal serial bus (USB) memory stick) storing instructions and/or parameters 1102 which when executed by a processor allow the processor to perform one or more of the steps of the methods of Figures 9 and 10.

It is noted that while the above describes example aspects, there are several variations and modifications which may be made to the disclosed solution without departing from the scope of the present invention.

It will be understood that although the above concepts have been discussed in the context of a 5GS, one or more of these concepts may be applied to other cellular systems.

The aspects may thus vary within the scope of the attached claims. In general, some aspects may be implemented in hardware or special purpose circuits, software, logic or any combination thereof. For example, some aspects may be implemented in hardware, while other aspects may be implemented in firmware or software which may be executed by a controller, microprocessor or other computing device, although aspects are not limited thereto. While various aspects may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The aspects may be implemented by computer software stored in a memory and executable by at least one data processor of the involved entities or by hardware, or by a combination of software and hardware. Further in this regard it should be noted that any procedures, e.g., as in Figures 9 and 10, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some aspects may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:
(a) hardware-only circuit implementations (such as implementations in only analogue and/or digital circuitry);
(b) combinations of hardware circuits and software, such as:
   (i) a combination of analogue and/or digital hardware circuit(s) with software/firmware and
   (ii) any portions of hardware processor(s) with software (including digital signal processor(s)), software, and memory(ies) that work together to cause an apparatus, such as the communications device or base station to perform the various functions previously described; and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some aspects However, various modifications and adaptations may become apparent to those skilled in the relevant arts in view of the foregoing description, when read in conjunction with the accompanying drawings and the appended claims. The scope of protection is provided by the claims as appended.

## Claims

1. An apparatus comprising at least one processor and at least one memory including computer code for one or more programs, the at least one memory and the computer code configured, with the at least one processor, to cause the apparatus at least to:
store (900) information relating to a plurality of cognitive network functions and/or machine learning models deployable on a network, each cognitive network function being associated with one or more machine learning models, each machine learning model being trained with one or more training contexts, the information comprising information about the one or more training contexts, each training context including a training conditions attribute;
receive (902) a first request for a cognitive network function and/or a machine learning model with a training context matching an expected context or a detected context or for information relating to a cognitive network function and/or a machine learning model with a training context matching an expected context or a detected context, wherein the training context, the expected context or the detected context includes a training conditions attribute indicating a location;
process (904) the first request to identify a cognitive network function and/or a machine learning model with a training context matching the expected context or the detected context; and
send (906) a response to the first request based on the processing.

2. The apparatus of claim 1, wherein processing (904) the first request to identify a cognitive network function and/or a machine learning model with a training context matching the expected context or the detected context comprises:
comparing the information relating to the plurality of cognitive network functions and/or machine learning models to identify a cognitive network function and/or a machine learning model with a training context matching the expected context or the detected context.

3. The apparatus of claim 1 or claim 2, wherein the at least one memory and the computer code are configured, with the at least one processor, to cause the apparatus at least to:
identify a cognitive network function and/or a machine learning model with a training context matching the expected context or the detected context;
send a second request for the identified cognitive network function and/or machine learning model;
receive a response to the second request comprising the identified cognitive network function and/or machine learning model; and
send a response to the first request comprising the identified cognitive network function and/or machine learning model.

4. The apparatus of claim 1 or claim 2, wherein the at least one memory and the computer code are configured, with the at least one processor, to cause the apparatus at least to:
identify a cognitive network function and/or a machine learning model with a training context matching the expected context or the detected context; and
send a response to the first request comprising information relating to the identified cognitive network function and/or machine learning model.

5. The apparatus of claim 1 or claim 2, wherein the at least one memory and the computer code are configured, with the at least one processor, to cause the apparatus at least to:
identify no cognitive network function and/or machine learning model with a training context matching the expected context or the detected context; and
send a response to the first request comprising an indication that no cognitive network function and/or machine learning model has been identified.

6. The apparatus of any of claim 1 to 5, wherein each training context, expected context or detected context further comprises one or more of the following context attributes:
a managed entity reference attribute, a data provider reference attribute, a start time attribute, an end time attribute, a training state attribute, an operating conditions attribute, a reference performance attribute, a cognitive network function properties attribute and/or a data characteristics attribute.

7. The apparatus of claim 6, wherein the first request originates from a network management function or a cognitive network function deployed on the network; and
wherein the response to the first request is directed to the network management function or the cognitive network function deployed on the network.

8. The apparatus of any of claims 1 to 7, wherein the apparatus is a cognitive network function and model selection function deployed on the network.

9. The apparatus of any of claims 1 to 8, wherein the at least one memory and the computer code are further configured, with the at least one processor, to cause the apparatus at least to:
receive a request for all cognitive network functions and/or all machine learning models with a network training context matching a network expected context or a network detected context or for information relation to all cognitive network functions and/or all machine learning models with a network training context matching a network expected context or a network detected context;
process the request to identify all cognitive network functions and/or all machine learning models with a network training context matching the network expected context or the network detected context.

10. The apparatus of any of claims 1 to 9, wherein each cognitive network function is associated with a cognitive network function information object class in an information model;
wherein each machine learning model is associated with a machine learning model information object class in the information model; and/or
wherein each training context, expected context or detected context is associated with a training context, expected context or detected context information object class in the information model.

11. The apparatus of claim 10, wherein the cognitive network function information object class comprises a cognitive network function properties attribute with a plurality of fields, each field having a single value selected among a fixed set of alternatives.

12. The apparatus of claim 10 or claim 11, wherein the machine learning model information object class comprises a training context attribute, an expected context attribute and/or a detected context attribute with a plurality of fields, each field having a single value selected among a fixed set of alternatives.

13. The apparatus of any of claims 10 to 12, wherein the training context, expected context or detected context information object class comprises one or more of the following training context, expected context or detected context attributes: a managed entity reference attribute. a data provider reference attribute, a start time attribute, an end time attribute, a training state attribute, an operating conditions attribute, a reference performance attribute, a cognitive network function properties attribute and/or a data characteristics attribute with a plurality of fields, each field having a single value selected among a fixed set of alternatives.

## Patentansprüche

1. Vorrichtung, umfassend mindestens einen Prozessor und mindestens einen Speicher, der Computercode für ein oder mehrere Programme enthält, wobei der mindestens eine Speicher und der Computercode mit dem mindestens einen Prozessor konfiguriert sind, um die Vorrichtung zu veranlassen, mindestens:
Informationen (900) zu speichern, die sich auf eine Vielzahl von kognitiven Netzwerkfunktionen und/oder Modellen für maschinelles Lernen beziehen, die in einem Netzwerk einsetzbar sind, wobei jede kognitive Netzwerkfunktion mit einem oder mehreren Modellen für maschinelles Lernen assoziiert ist, wobei jedes Modell für maschinelles Lernen mit einem oder mehreren Trainingskontexten trainiert ist, wobei die Informationen Informationen über den einen oder die mehreren Trainingskontexte umfassen, wobei jeder Trainingskontext ein Trainingsbedingungenattribut enthält;
eine erste Anforderung (902) zu empfangen für eine kognitive Netzwerkfunktion und/oder ein Modell für maschinelles Lernen mit einem Trainingskontext, der einem erwarteten Kontext oder einem detektierten Kontext entspricht, oder für Informationen, die sich auf eine kognitive Netzwerkfunktion und/oder ein Modell für maschinelles Lernen mit einem Trainingskontext beziehen, der einem erwarteten Kontext oder einem detektierten Kontext entspricht, wobei der Trainingskontext, der erwartete Kontext oder der detektierte Kontext ein Trainingsbedingungenattribut enthält, das einen Standort angibt;
die erste Anforderung zu verarbeiten (904), um eine kognitive Netzwerkfunktion und/oder ein Modell für maschinelles Lernen mit einem Trainingskontext zu identifizieren, der dem erwarteten Kontext oder dem detektierten Kontext entspricht; und
eine Antwort (906) auf die erste Anforderung basierend auf der Verarbeitung zu senden.

2. Vorrichtung nach Anspruch 1, wobei das Verarbeiten (904) der ersten Anforderung zum Identifizieren einer kognitiven Netzwerkfunktion und/oder eines Modells für maschinelles Lernen mit einem Trainingskontext, der dem erwarteten Kontext oder dem detektierten Kontext entspricht, umfasst:
Vergleichen der Informationen, die sich auf die Vielzahl von kognitiven Netzwerkfunktionen und/oder Modellen für maschinelles Lernen beziehen, mit der Anforderung, um eine kognitive Netzwerkfunktion und/oder ein Modell für maschinelles Lernen mit einem Trainingskontext zu identifizieren, der dem erwarteten Kontext oder dem detektierten Kontext entspricht.

3. Vorrichtung nach Anspruch 1 oder Anspruch 2, wobei der mindestens eine Speicher und der Computercode mit dem mindestens einen Prozessor konfiguriert sind, um die Vorrichtung zu veranlassen, mindestens:
eine kognitive Netzwerkfunktion und/oder ein Modell für maschinelles Lernen mit einem Trainingskontext zu identifizieren, der dem erwarteten Kontext oder dem detektierten Kontext entspricht;
eine zweite Anforderung für die identifizierte kognitive Netzwerkfunktion und/oder das identifizierte Modell für maschinelles Lernen zu senden;
eine Antwort auf die zweite Anforderung zu empfangen, die die identifizierte kognitive Netzwerkfunktion und/oder das identifizierte Modell für maschinelles Lernen umfasst; und
eine Antwort auf die erste Anforderung zu senden, die die identifizierte kognitive Netzwerkfunktion und/oder das identifizierte Modell für maschinelles Lernen umfasst.

4. Vorrichtung nach Anspruch 1 oder Anspruch 2, wobei der mindestens eine Speicher und der Computercode mit dem mindestens einen Prozessor konfiguriert sind, um die Vorrichtung zu veranlassen, mindestens:
eine kognitive Netzwerkfunktion und/oder ein Modell für maschinelles Lernen mit einem Trainingskontext zu identifizieren, der dem erwarteten Kontext oder dem detektierten Kontext entspricht; und
eine Antwort auf die erste Anforderung zu senden, die Informationen umfasst, die sich auf die identifizierte kognitive Netzwerkfunktion und/oder das identifizierte Modell für maschinelles Lernen beziehen.

5. Vorrichtung nach Anspruch 1 oder Anspruch 2, wobei der mindestens eine Speicher und der Computercode mit dem mindestens einen Prozessor konfiguriert sind, um die Vorrichtung zu veranlassen, mindestens:
keine kognitive Netzwerkfunktion und/oder kein Modell für maschinelles Lernen mit einem Trainingskontext zu identifizieren, der dem erwarteten Kontext oder dem detektierten Kontext entspricht; und
eine Antwort auf die erste Anforderung zu senden, die eine Angabe umfasst, dass keine kognitive Netzwerkfunktion und/oder kein Modell für maschinelles Lernen identifiziert wurde.

6. Vorrichtung nach einem der Ansprüche 1 bis 5, wobei jeder Trainingskontext, erwartete Kontext oder detektierte Kontext ferner eines oder mehrere der folgenden Kontextattribute umfasst:
ein Attribut für verwaltete Entitätsreferenz, ein Attribut für Datenanbieterreferenz, ein Startzeitattribut, ein Endzeitattribut, ein Trainingszustandsattribut, ein Betriebsbedingungenattribut, ein Referenzleistungsattribut, ein Attribut für kognitive Netzwerkfunktionseigenschaften und/oder ein Datencharakteristikattribut.

7. Vorrichtung nach Anspruch 6, wobei die erste Anforderung von einer Netzwerkverwaltungsfunktion oder einer kognitiven Netzwerkfunktion stammt, die im Netzwerk eingesetzt ist; und
wobei die Antwort auf die erste Anforderung an die Netzwerkverwaltungsfunktion oder die kognitive Netzwerkfunktion gerichtet ist, die im Netzwerk eingesetzt ist.

8. Vorrichtung nach einem der Ansprüche 1 bis 7, wobei die Vorrichtung eine kognitive Netzwerkfunktion und Modellauswahlfunktion ist, die im Netzwerk eingesetzt ist.

9. Vorrichtung nach einem der Ansprüche 1 bis 8, wobei der mindestens eine Speicher und der Computercode ferner mit dem mindestens einen Prozessor konfiguriert sind, um die Vorrichtung zu veranlassen, mindestens:
eine Anforderung für alle kognitiven Netzwerkfunktionen und/oder alle Modelle für maschinelles Lernen mit einem Netzwerktrainingskontext zu empfangen, der einem erwarteten Netzwerkkontext oder einem detektierten Netzwerkkontext entspricht, oder für Informationen, die sich auf alle kognitiven Netzwerkfunktionen und/oder alle Modelle für maschinelles Lernen mit einem Netzwerktrainingskontext beziehen, der einem erwarteten Netzwerkkontext oder einem detektierten Netzwerkkontext entspricht;
die Anforderung zu verarbeiten, um alle kognitiven Netzwerkfunktionen und/oder alle Modelle für maschinelles Lernen mit einem Netzwerktrainingskontext zu identifizieren, der dem erwarteten Netzwerkkontext oder dem detektierten Netzwerkkontext entspricht.

10. Vorrichtung nach einem der Ansprüche 1 bis 9, wobei jede kognitive Netzwerkfunktion mit einer Informationsobjektklasse für kognitive Netzwerkfunktion in einem Informationsmodell assoziiert ist;
wobei jedes Modell für maschinelles Lernen mit einer Informationsobjektklasse für Modell für maschinelles Lernen in dem Informationsmodell assoziiert ist; und/oder
wobei jeder Trainingskontext, erwartete Kontext oder detektierte Kontext mit einer Informationsobjektklasse für Trainingskontext, erwarteten Kontext oder detektierten Kontext in dem Informationsmodell assoziiert ist.

11. Vorrichtung nach Anspruch 10, wobei die Informationsobjektklasse für kognitive Netzwerkfunktion ein Attribut für kognitive Netzwerkfunktionseigenschaften mit einer Vielzahl von Feldern umfasst, wobei jedes Feld einen einzelnen Wert aufweist, der aus einem festen Satz von Alternativen ausgewählt ist.

12. Vorrichtung nach Anspruch 10 oder Anspruch 11, wobei die Informationsobjektklasse für Modell für maschinelles Lernen ein Trainingskontextattribut, ein Attribut für erwarteten Kontext und/oder ein Attribut für detektierten Kontext mit einer Vielzahl von Feldern umfasst, wobei jedes Feld einen einzelnen Wert aufweist, der aus einem festen Satz von Alternativen ausgewählt ist.

13. Vorrichtung nach einem der Ansprüche 10 bis 12, wobei die Informationsobjektklasse für Trainingskontext, erwarteten Kontext oder detektierten Kontext eines oder mehrere der folgenden Attribute für Trainingskontext, erwarteten Kontext oder detektierten Kontext umfasst: ein Attribut für verwaltete Entitätsreferenz, ein Attribut für Datenanbieterreferenz, ein Startzeitattribut, ein Endzeitattribut, ein Trainingszustandsattribut, ein Betriebsbedingungenattribut, ein Referenzleistungsattribut, ein Attribut für kognitive Netzwerkfunktionseigenschaften und/oder ein Datencharakteristikattribut mit einer Vielzahl von Feldern, wobei jedes Feld einen einzelnen Wert aufweist, der aus einem festen Satz von Alternativen ausgewählt ist.

## Revendications

1. Appareil comprenant au moins un processeur et au moins une mémoire incluant du code informatique pour un ou plusieurs programmes, l'au moins une mémoire et le code informatique étant configurés, avec l'au moins un processeur, pour amener l'appareil à au moins :
stocker (900) des informations relatives à une pluralité de fonctions de réseau cognitif et/ou de modèles d'apprentissage automatique déployables sur un réseau, chaque fonction de réseau cognitif étant associée à un ou plusieurs modèles d'apprentissage automatique, chaque modèle d'apprentissage automatique étant entraîné avec un ou plusieurs contextes d'entraînement, les informations comprenant des informations sur le ou les contextes d'entraînement, chaque contexte d'entraînement incluant un attribut de conditions d'entraînement ;
recevoir (902) une première requête pour une fonction de réseau cognitif et/ou un modèle d'apprentissage automatique avec un contexte d'entraînement correspondant à un contexte attendu ou un contexte détecté ou pour des informations relatives à une fonction de réseau cognitif et/ou un modèle d'apprentissage automatique avec un contexte d'entraînement correspondant à un contexte attendu ou un contexte détecté, dans lequel le contexte d'entraînement, le contexte attendu ou le contexte détecté inclut un attribut de conditions d'entraînement indiquant un emplacement ;
traiter (904) la première requête pour identifier une fonction de réseau cognitif et/ou un modèle d'apprentissage automatique avec un contexte d'entraînement correspondant au contexte attendu ou au contexte détecté ; et
envoyer (906) une réponse à la première requête sur la base du traitement.

2. Appareil selon la revendication 1, dans lequel le traitement (904) de la première requête pour identifier une fonction de réseau cognitif et/ou un modèle d'apprentissage automatique avec un contexte d'entraînement correspondant au contexte attendu ou au contexte détecté comprend :
comparer les informations relatives à la pluralité de fonctions de réseau cognitif et/ou de modèles d'apprentissage automatique à l'exigence pour identifier une fonction de réseau cognitif et/ou un modèle d'apprentissage automatique avec un contexte d'entraînement correspondant au contexte attendu ou au contexte détecté.

3. Appareil selon la revendication 1 ou la revendication 2, dans lequel l'au moins une mémoire et le code informatique sont configurés, avec l'au moins un processeur, pour amener l'appareil à au moins :
identifier une fonction de réseau cognitif et/ou un modèle d'apprentissage automatique avec un contexte d'entraînement correspondant au contexte attendu ou au contexte détecté ;
envoyer une seconde requête pour la fonction de réseau cognitif et/ou le modèle d'apprentissage automatique identifié ;
recevoir une réponse à la seconde requête comprenant la fonction de réseau cognitif et/ou le modèle d'apprentissage automatique identifié ; et
envoyer une réponse à la première requête comprenant la fonction de réseau cognitif et/ou le modèle d'apprentissage automatique identifié.

4. Appareil selon la revendication 1 ou la revendication 2, dans lequel l'au moins une mémoire et le code informatique sont configurés, avec l'au moins un processeur, pour amener l'appareil à au moins :
identifier une fonction de réseau cognitif et/ou un modèle d'apprentissage automatique avec un contexte d'entraînement correspondant au contexte attendu ou au contexte détecté ; et
envoyer une réponse à la première requête comprenant des informations relatives à la fonction de réseau cognitif et/ou au modèle d'apprentissage automatique identifié.

5. Appareil selon la revendication 1 ou la revendication 2, dans lequel l'au moins une mémoire et le code informatique sont configurés, avec l'au moins un processeur, pour amener l'appareil à au moins :
identifier aucune fonction de réseau cognitif et/ou aucun modèle d'apprentissage automatique avec un contexte d'entraînement correspondant au contexte attendu ou au contexte détecté ; et
envoyer une réponse à la première requête comprenant une indication qu'aucune fonction de réseau cognitif et/ou aucun modèle d'apprentissage automatique n'a été identifié.

6. Appareil selon l'une quelconque des revendications 1 à 5, dans lequel chaque contexte d'entraînement, contexte attendu ou contexte détecté comprend en outre un ou plusieurs des attributs de contexte suivants :
un attribut de référence d'entité gérée, un attribut de référence de fournisseur de données, un attribut d'heure de début, un attribut d'heure de fin, un attribut d'état d'entraînement, un attribut de conditions de fonctionnement, un attribut de performance de référence, un attribut de propriétés de fonction de réseau cognitif et/ou un attribut de caractéristiques de données.

7. Appareil selon la revendication 6, dans lequel la première requête provient d'une fonction de gestion de réseau ou d'une fonction de réseau cognitif déployée sur le réseau ; et
dans lequel la réponse à la première requête est dirigée vers la fonction de gestion de réseau ou la fonction de réseau cognitif déployée sur le réseau.

8. Appareil selon l'une quelconque des revendications 1 à 7, dans lequel l'appareil est une fonction de réseau cognitif et de sélection de modèle déployée sur le réseau.

9. Appareil selon l'une quelconque des revendications 1 à 8, dans lequel l'au moins une mémoire et le code informatique sont en outre configurés, avec l'au moins un processeur, pour amener l'appareil à au moins :
recevoir une requête pour toutes les fonctions de réseau cognitif et/ou tous les modèles d'apprentissage automatique avec un contexte d'entraînement réseau correspondant à un contexte attendu réseau ou un contexte détecté réseau ou pour des informations relatives à toutes les fonctions de réseau cognitif et/ou tous les modèles d'apprentissage automatique avec un contexte d'entraînement réseau correspondant à un contexte attendu réseau ou un contexte détecté réseau ;
traiter la requête pour identifier toutes les fonctions de réseau cognitif et/ou tous les modèles d'apprentissage automatique avec un contexte d'entraînement réseau correspondant au contexte attendu réseau ou au contexte détecté réseau.

10. Appareil selon l'une quelconque des revendications 1 à 9, dans lequel chaque fonction de réseau cognitif est associée à une classe d'objet d'information de fonction de réseau cognitif dans un modèle d'information ;
dans lequel chaque modèle d'apprentissage automatique est associé à une classe d'objet d'information de modèle d'apprentissage automatique dans le modèle d'information ; et/ou
dans lequel chaque contexte d'entraînement, contexte attendu ou contexte détecté est associé à une classe d'objet d'information de contexte d'entraînement, de contexte attendu ou de contexte détecté dans le modèle d'information.

11. Appareil selon la revendication 10, dans lequel la classe d'objet d'information de fonction de réseau cognitif comprend un attribut de propriétés de fonction de réseau cognitif avec une pluralité de champs, chaque champ ayant une valeur unique sélectionnée parmi un ensemble fixe d'alternatives.

12. Appareil selon la revendication 10 ou la revendication 11, dans lequel la classe d'objet d'information de modèle d'apprentissage automatique comprend un attribut de contexte d'entraînement, un attribut de contexte attendu et/ou un attribut de contexte détecté avec une pluralité de champs, chaque champ ayant une valeur unique sélectionnée parmi un ensemble fixe d'alternatives.

13. Appareil selon l'une quelconque des revendications 10 à 12, dans lequel la classe d'objet d'information de contexte d'entraînement, de contexte attendu ou de contexte détecté comprend un ou plusieurs des attributs de contexte d'entraînement, de contexte attendu ou de contexte détecté suivants : un attribut de référence d'entité gérée, un attribut de référence de fournisseur de données, un attribut d'heure de début, un attribut d'heure de fin, un attribut d'état d'entraînement, un attribut de conditions de fonctionnement, un attribut de performance de référence, un attribut de propriétés de fonction de réseau cognitif et/ou un attribut de caractéristiques de données avec une pluralité de champs, chaque champ ayant une valeur unique sélectionnée parmi un ensemble fixe d'alternatives.
